# EUROPÄISCHE PATENTSCHRIFT

(11) **EP 2 561 487 B1**
(45) Veröffentlichungstag und Bekanntmachung des Hinweises auf die Patenterteilung: **27.05.2020**
(21) Anmeldenummer: 11714486.5
(22) Anmeldetag: 17.03.2011
(51) Int. Cl.: G07D 11/60, G07F 19/00, G07D 11/30

(54) **VERFAHREN ZUR AUSZAHLUNG VON BANKNOTEN DURCH GELDAUTOMATEN UND GELDAUTOMAT ZUR DURCHFÜHRUNG DES VERFAHRENS**
METHOD FOR PAYING OUT BANKNOTES BY CASH MACHINES AND CASH MACHINE FOR CARRYING OUT THE METHOD
PROCÉDÉ DE DISTRIBUTION DE BILLETS DE BANQUE AU MOYEN DE DISTRIBUTEURS AUTOMATIQUES DE BILLETS DE BANQUE ET DISTRIBUTEUR AUTOMATIQUE DE BILLETS DE BANQUE PERMETTANT DE METTRE EN OEUVRE LEDIT PROCÉDÉ

(30) Priorität: 19.04.2010 DE 102010015588
(43) Veröffentlichungstag der Anmeldung: 27.02.2013
(73) Patentinhaber: CI Tech Sensors AG, 3400 Burgdorf (CH)
(72) Erfinder: STÖCKLI, Armin, CH-3063 Ittigen (CH); SCHLETTI, Reto, CH-3400 Burgdorf (CH)
(74) Vertreter: Viering, Jentschura & Partner mbB Patent- und Rechtsanwälte
(86) Internationale Anmeldenummer: PCT/EP2011/001330
(87) Internationale Veröffentlichungsnummer: WO 2011/131276

(56) Entgegenhaltungen:
- DE-A1-102004 060 316
- DE-A1-102004 060 316
- US-A- 6 065 672
- US-B1- 6 550 671

## Beschreibung

Die Erfindung geht aus von einem Verfahren zur Auszahlung von Banknoten durch einen Geldautomaten und von einem Geldautomat zur Durchführung des Verfahrens.

Ein Geldautomat ist eine Vorrichtung zur automatisierten Aus- und/ oder Einzahlung von Bargeld bevorzugt in Form von Banknoten. Geldautomaten werden auch als Bankautomaten bezeichnet, sofern sie zur Tätigung von Bankgeschäften eingesetzt werden. Darüber hinaus können Geldautomaten auch an Tankstellen oder in Selbstbedienungswarenhäusern zur automatischen Abwicklung eines Bezahlvorgangs eingesetzt werden. Es sind verschiedene Arten von Geldautomaten bekannt: Geldausgabeautomaten, Geldeinzahlungsautomaten und Cash Recycling Automaten. An Geldausgabeautomaten kann ein Kunde Bargeld von seinem Bankkonto abheben. Es erfolgt daher eine Ausgabe von Banknoten an einen Kunden. An Geldeinzahlungsautomaten kann ein Kunde Bargeld einzahlen, beispielsweise auf sein Bankkonto oder zur Abwicklung eines Bezahlvorgangs. Es erfolgt daher eine Eingabe von Banknoten durch einen Kunden in den Geldeinzahlungsautomaten. Bei Cash Recycling Automaten kann ein Kunde sowohl Geld abheben als auch Geld einzahlen. Es erfolgt daher sowohl eine Eingabe als auch eine Ausgabe von Banknoten.

Bei der Einzahlung von Banknoten werden in der Regel mittels eines oder mehreren in den Geldautomaten integrierten Sensoren die Banknoten auf Ihre Echtheit sowie auf Fälschungen überprüft. Wird dabei eine Fälschung ermittelt, so wird diese ausgesondert, so dass sie nicht mehr in den Zahlungsverkehr gelangt.

Es kann jedoch nicht vollständig ausgeschlossen werden, dass eine gefälschte oder eine anderweitig ungültige Banknote nicht erkannt wird. Zu ungültigen Banknoten zählen nicht nur Fälschungen sondern auch Banknoten, die aufgrund einer speziellen Kennzeichnung, beispielsweise einer Färbung oder eines Stempels ungültig sind. Wird eine ungültige Banknote bei der Eingabe in einen Geldautomaten nicht festgestellt und daher nicht ausgesondert, so kann sie durch einen Geldausgabeautomaten oder einen Cash Recycling Automaten erneut an einen Kunden ausgegeben werden. Als nachteilig erweist sich, dass ein Kunde, der eine derartige ungültige Banknote erhält, die Ausgabe durch den Geldautomaten nicht nachweisen kann. Ferner kann ein Kunde fälschlicherweise behaupten, eine ungültige Banknote bei der Auszahlung durch einen Geldautomaten erhalten zu haben. In beiden Fällen hat der Betreiber des Geldautomaten keine Möglichkeit, die durch den Geldautomaten ausgegebenen Banknoten zurückzuverfolgen und einem Kunden zuzuordnen. Er ist mit einer Behauptung eines Kunden konfrontiert, die er nicht überprüfen kann. Auch der Kunde hat mit Ausnahme eines Zeugen keine Möglichkeit, seine Behauptung nachzuweisen.

Aus der US 6065672 A ist ein Verfahren zur Handhabung und Verfolgung von Banknoten unter Verwendung einer die Banknoten aufnehmenden Kassette bekannt. Dabei ist die Kassette mit einem Speicher ausgestattet. In dem Speicher sind zu allen in der Kassette enthaltenen Banknoten individuelle Merkmale, insbesondere Seriennummern abgespeichert. Anhand der Seriennummern werden die Banknoten verfolgt und z.B. durch den Vergleich der Seriennummern mit denen von bekannten Fälschungen fälschungsverdächtige Banknoten erkannt.

Der Erfindung liegt die Aufgabe zugrunde, ein Verfahren zur Auszahlung von Banknoten an Geldautomaten sowie einen Geldautomaten zur Durchführung des Verfahrens zur Verfügung zu stellen, welche die Rückverfolgung der an Kunden ausgegebenen Banknoten ermöglichen.

Diese Aufgabe wird durch ein Verfahren mit den Merkmalen des Anspruchs 1 und durch einen Geldautomaten mit den Merkmalen des Anspruchs 11 gelöst.

Das Verfahren zeichnet sich dadurch aus, dass zu einer bei einer Auszahlung an einen Kunden ausgegebenen Banknote ein die Banknote von anderen Banknoten unterscheidendes individuelles charakteristisches Merkmal der Banknote erfasst wird. Die Erfassung der Merkmale bedeutet, dass die Merkmale entweder vorgegeben sind, oder dass die Merkmale mittels eines oder mehreren Sensoren ermittelt werden. Bei einem derartigen individuellen Merkmal kann es sich beispielsweise um die Seriennummer handeln. Jede Banknote ist mit einer Seriennummer ausgestattet. Dabei weist jede Banknote eine andere Seriennummer auf als andere Banknoten. Anhand der Seriennummer kann daher eine Banknote von anderen Banknoten unterschieden werden. Andere individuelle Merkmale von Banknoten können beispielsweise die intrinsisch individuelle Faserstruktur, die Ausrichtung und die Position bestimmter Erkennungsmerkmale, ein Druckversatz, eine Beschädigung, ein Barcode, ein Matrixcode oder ein RFID-Chip sein.

Werden in einen Geldautomat Geldkassetten mit Banknoten eingesetzt, so können die Seriennummern der abgelegten Banknoten und/ oder andere individuelle Merkmale in einer Speichereinrichtung der Geldkassette abgelegt sein. Die individuellen Merkmale sind damit bereits im Geldautomat vorgegeben und müssen nicht ermittelt werden. Darüber hinaus besteht die Möglichkeit, dass der Geldautomat mit einem Sensor ausgestattet ist, der unmittelbar vor der Ausgabe einer Banknote an einen Kunden das zugehörige individuelle Merkmal der Banknote bestimmt. Dabei kann es sich beispielsweise um einen optischen Sensor handeln. Dieser ist in der Lage, mittels optischer Zeichenerkennung die Seriennummer einer Banknote zu erfassen. Andere individuelle Merkmale von Banknoten können ebenfalls optisch ermittelt werden. Darüber hinaus sind auch Sensoren einsetzbar, die anhand bestimmter elektrischer oder magnetischer Eigenschaften individuelle Merkmale von Banknoten ermitteln. Der Sensor hängt von dem individuellen Merkmal ab, das zu den Banknoten erfasst werden soll.

Handelt es sich bei einer Banknote um eine Fälschung, so kann deren Seriennummer mit der Seriennummer einer echten Banknote identisch sein. Um beide Banknoten voneinander zu unterscheiden, kann es sinnvoll sein, mindestens ein weiteres individuelles Merkmal der Banknoten zu erfassen, wie beispielsweise die Faserstruktur, eventuelle Beschädigungen oder fehlende Sicherheitsmerkmale. Um eine exakte Rekonstruktion zu gewährleisten können dabei sämtliche durch den Sensor erfassten Signale, sogenannte Rohsignale, gespeichert werden. Hierzu zählen beispielsweise durch den Sensor erfasste Scan-Bilder in voller oder reduzierter Auflösung.

Die individuellen Merkmale der an dem Geldautomat ausgegebenen Banknoten werden mit den Daten einer Transaktion verknüpft. Hierzu zählen die Daten der Kunden, an die die Banknoten ausgegeben wurden oder die Daten der Transaktion der Auszahlung oder beide. Dabei kann es sich beispielsweise um die Bankverbindung der Kunden, insbesondere um die Kontonummer und die Bankleitzahl, um den Namen, den Ort des Geldautomaten, das Datum und die Uhrzeit der Transaktion handeln. Diese Daten ermöglichen entweder in Alleinstellung oder in Kombination mit weiteren in Datenbanken abgelegten Daten die eindeutige Zuordnung einer Banknote zu einem Kunden. Auf diese Weise ist die Rückverfolgung einer Banknote möglich. Behauptet ein Kunde, an einem Geldautomaten eine ungültige Banknote erhalten zu haben, so kann dies anhand der ermittelten und abgespeichert Daten gegebenenfalls unter Vorlage der betreffenden Banknote überprüft werden.

Das charakteristische Merkmal und die Daten eines Kunden oder der zugehörigen Transaktion können zu jeder Banknote oder nur zu bestimmten Banknoten erfasst und abgespeichert werden. Erfolgt die Erfassung und Abspeicherung nur zu bestimmten Banknoten, so kann dies beispielsweise auf Fälle beschränkt werden, in denen der Kunde die an ihn ausgegebenen Banknoten ablehnt und erneut in den Geldautomat eingibt. Werden die an einen Kunden ausgegebenen Banknoten dagegen nicht durch den Kunden beanstandet, so kann eine Datenerfassung und/ oder Datenabspeicherung unterbleiben. Auf diese Weise kann die Datenmenge insgesamt reduziert werden. In den Fällen, in denen ausgegebene Banknoten dagegen abgelehnt werden, können einen Vielzahl von Daten erfasst und abgespeichert werden, zum Beispiel Scan-Bilder eines optischen Sensors in voller Auflösung.

Das Verfahren kann sowohl bei reinen Geldausgabeautomaten als auch bei Cash Recycling Automaten angewandt werden. Cash Recycling Automaten sind häufig mit mindestens einem Sensor ausgestattet, der charakteristische Merkmale der eingegebenen Banknoten ermittelt, um die Rückverfolgung von ungültigen Banknoten bereits bei der Eingabe zu ermöglichen. Werden diese Merkmale in eine Speichereinrichtung eingegeben, so sind die betreffenden Merkmale bei der Ausgabe dieser Banknoten an einen Kunden bereits bekannt und vorgegeben. Sie müssen daher nicht erneut ermittelt werden. Werden jedoch bei der Eingabe andere Merkmale der Banknoten erfasst als bei der Ausgabe, so ist ein zusätzlicher Sensor notwendig. Durch den zusätzlichen Sensor und die Überprüfung der Banknoten auf individuelle Merkmale bei der Ausgabe wird die Wahrscheinlichkeit erhöht, Fälschungen festzustellen.

Bei dem Kunden kann es sich um einen Kunden der den Geldautomaten betreibenden Bank oder um einen Bankangestellten handeln. Die Auszahlung von Geld erfolgt meist auch dann durch einen Geldautomaten, wenn der Bankkunde durch einen Bankangestellten bedient wird. In diesem Fall können einer ausgezahlten Banknote nicht nur die Daten des Bankkunden sondern auch des Bankangestellten zugeordnet werden. Diese Daten zählen zu den Daten der Transaktion.

Nach einer vorteilhaften Ausgestaltung der Erfindung werden die Banknoten vor der Ausgabe an Kunden in einer Kassette abgelegt. Bei der Ablage der Banknoten in der Kassette wird mindestens ein individuelles Merkmal jeder Banknote erfasst und abgespeichert, so dass die individuellen Merkmale der Banknoten bei der Auszahlung bekannt und vorgegeben sind. In diesem Fall ist ein Sensor, der individuelle Merkmale der Banknoten ermittelt, möglich, jedoch nicht zwingend notwendig. Handelt es sich bei dem Geldautomat um einen Geldausgabeautomat, so werden die Banknoten in Geldkassetten in den Geldautomat eingesetzt. Die Erfassung und Abspeicherung des individuellen Merkmals der Banknoten erfolgt daher außerhalb des Geldautomaten bei der Befüllung der Geldkassette. Handelt es sich bei dem Geldautomaten dagegen um einen Cash Recycling Automaten, so befindet sich eine Geldkassette in dem Geldautomaten, welche durch die an dem Geldautomaten eingezahlten Banknoten gefüllt und durch die an dem Geldautomat ausgezahlten Banknoten entleert wird. In diesem Fall erfolgt die Erfassung und Abspeicherung der Daten betreffend das individuelle Merkmal von Banknoten in dem Cash Recycling Automat. Wird dagegen eine gefüllte Geldkassette in den Cash Recycling Automat eingesetzt, so kann die Erfassung und Abspeicherung wie bei Geldausgabeautomaten extern erfolgen.

Nach einer weiteren vorteilhaften Ausgestaltung der Erfindung wird mindestens ein individuelles Merkmal jeder Banknote unmittelbar vor der Ausgabe an einen Kunden mittels mindestens eines Sensors bestimmt und abgespeichert. Erfolgt die Feststellung der individuellen Merkmale unmittelbar vor der Ausgabe der Banknoten, so ist die Wahrscheinlichkeit von Übermittlungsfehlern oder von falschen Zuordnungen zwischen Banknote und individuellem Merkmal nicht gegeben oder zumindest reduziert.

Nach einer weiteren vorteilhaften Ausgestaltung werden als individuelles Merkmal eine Seriennummer, ein Barcode, ein Matrixcode und/ oder die in einem RFID-Chip einer Banknote enthaltenen Daten erfasst und abgespeichert.

Erfindungsgemäß können die an einen Kunden ausgegebenen Banknoten unmittelbar nach der Ausgabe auf Wunsch des Kunden durch den Geldautomaten wieder zurückgenommen werden. Der Kunde kann somit die an ihn durch einen Geldautomaten ausgegebenen Banknoten nach eigener visueller Überprüfung wieder in den Geldautomaten eingeben. Stellt er fest, dass sich unter den an ihn ausgegebenen Banknoten eine Fälschung oder zumindest eine von ihm vermutete Fälschung befindet, so kann er die Annahme der Banknoten verweigern und die Banknoten wieder in den Geldautomat eingeben. In diesem Fall sollte eine Überprüfung der eingegebenen Banknoten auf Übereinstimmung mit den zuvor ausgegebenen Banknoten durchgeführt werden. Die in den Geldautomat eingegebenen Banknoten werden nur dann durch den Geldautomaten angenommen, wenn sie mit den zuvor an den Kunden ausgegebenen Banknoten in den individualisierenden Merkmalen übereinstimmen.

Auf einer Anzeigeeinrichtung des Geldautomaten wird nach der Ausgabe der Banknoten eine Abfrage betreffend die Annahme oder Ablehnung der ausgegebenen Banknoten dem Kunden angezeigt. Nach Eingabe der Ablehnung werden die Banknoten durch den Kunden in den Geldautomaten eingegeben. Der Kunde kann dann entscheiden, ob er den Vorgang der Auszahlung von Banknoten abbrechen möchte oder ob er gegebenenfalls andere Banknoten ausgezahlt haben möchte.

Bei der Eingabe der Banknoten wird durch einen Sensor mindestens ein individuelles Merkmal der Banknoten ermittelt. Dadurch wird die Überprüfung der durch einen Kunden abgelehnten Banknoten nach der erneuten Eingabe in den Geldautomaten ermöglicht. Stimmen die Banknoten nicht mit den zuvor durch den Geldautomaten ausgegebenen Banknoten überein, werden sie nach einer vorteilhaften Ausgestaltung erneut an den Kunden ausgegeben. In diesem Fall werden sie trotz der Ablehnung von dem Konto des Kunden abgebucht.

Der erfindungsgemäße Geldautomat zur Auszahlung von Banknoten an einen Kunden und zur Durchführung des erfindungsgemäßen Verfahrens zeichnet sich dadurch aus, dass er mit mindestens einem ein individuelles Merkmal jeder auszugebenden Banknote erfassenden Sensor ausgestattet Er ist ferner mit einer Datenverarbeitungseinrichtung ausgestattet, die zu jeder an einen Kunden ausgegebenen Banknote das durch den Sensor erfasste individuelle Merkmal mit den Daten des Kunden und/ oder der die Auszahlung betreffenden Transaktion verknüpft. Auf diese Weise ist eine eindeutige Zuordnung zwischen einer Banknote und einem Kunden, an den die Banknote an dem Geldautomat ausgegeben wurde, möglich.

Nach einer weiteren vorteilhaften Ausgestaltung der Erfindung ist der Geldautomat mit einer Schnittstelle ausgestattet, um die durch den Sensor erfassten individuellen Merkmale der Banknoten an eine externe Datenverarbeitungseinrichtung auszugeben. Auf diese Weise kann die Verknüpfung zwischen einer an einem Geldautomaten ausgegebenen Banknote und einem Kunden, an den die Banknote am Geldautomaten ausgegeben wurde, außerhalb der Geldautomaten stattfinden.

Der Geldautomat ist mit mindestens einem Sensor ausgestattet. Dieser erfasst mindestens ein Merkmal der ausgegebenen und durch einen Kunden abgelehnten Banknoten nach der erneuten Eingabe in den Geldautomaten. Auf diese Weise können ausgegebene und in den Geldautomat wieder eingegebene Banknoten auf Übereinstimmung überprüft werden.

Weitere Vorteile und vorteilhafte Ausgestaltungen sind den Ansprüchen zu entnehmen.

## Patentansprüche

1. Verfahren zur Auszahlung von Banknoten durch Geldautomaten **gekennzeichnet durch** folgende Verfahrensschritte:
• dass zu einer bei einer Auszahlung an einen Kunden ausgegebenen Banknote ein die Banknote von anderen Banknoten unterscheidendes individuelles charakteristisches Merkmal der Banknote erfasst und abgespeichert wird, und
• dass zu der an einen Kunden ausgegebenen Banknote Daten des Kunden und/oder Daten der die Auszahlung betreffenden Transaktion erfasst und abgespeichert werden,
• dass die individuellen Merkmale der an dem Geldautomat ausgegebenen Banknote mit den Daten der Transaktion verknüpft werden, wozu die Daten des Kunden, an den die Banknote ausgegeben wurde oder die Daten der Transaktion der Auszahlung oder beide zählen,
**dadurch** gekennzeichnet
• dass auf einer Anzeigeeinrichtung des Geldautomaten nach der Ausgabe der Banknote eine Abfrage betreffend die Annahme oder Ablehnung der ausgegebenen Banknote dem Kunden angezeigt wird, und
• dass nach Eingabe der Ablehnung die Banknote **durch** den Kunden in den Geldautomaten eingegeben wird, wobei, bei der Eingabe der Banknote, **durch** einen Sensor mindestens ein individuelles charakteristisches Merkmal der eingegebenen Banknote ermittelt und auf Übereinstimmung mit dem abgespeicherten Merkmal überprüft wird.

2. Verfahren nach Anspruch 1, **dadurch gekennzeichnet,**
**dass** die Banknoten vor der Ausgabe an Kunden in einer Geldkassette abgelegt werden, und dass bei der Ablage der Banknoten in der Geldkassette mindestens ein individuelles Merkmal jeder Banknote erfasst und abgespeichert wird.

3. Verfahren nach Anspruch 1, **dadurch gekennzeichnet,**
**dass** mindestens ein individuelles Merkmal jeder Banknote unmittelbar vor der Ausgabe an einen Kunden mittels mindestens eines Sensors bestimmt und abgespeichert wird.

4. Verfahren nach einem der vorhergehenden Ansprüche, **dadurch gekennzeichnet,**
**dass** als individuelles Merkmal eine Seriennummer, ein Barcode, ein Matrixcode und/ oder die in einem RFID-Chip einer Banknote enthaltenen Daten erfasst und abgespeichert werden.

5. Verfahren nach einem der vorhergehenden Ansprüche, **dadurch gekennzeichnet,**
**dass** als Daten eines Kunden die Daten seiner Bankverbindung erfasst und abgespeichert werden.

6. Verfahren nach einem der vorhergehenden Ansprüche, **dadurch gekennzeichnet,**
**dass** als Daten der die Auszahlung betreffenden Transaktion der Ort, das Datum und die Uhrzeit der Auszahlung erfasst und abgespeichert werden.

7. Verfahren nach einem der vorhergehenden Ansprüche, **dadurch gekennzeichnet,**
**dass** die an einen Kunden ausgegebenen Banknoten unmittelbar nach der Ausgabe auf Wunsch des Kunden durch den Geldautomaten wieder zurückgenommen werden.

8. Verfahren nach Anspruch 1, **dadurch gekennzeichnet,**
**dass** bei einer Ablehnung der ausgegebenen Banknote und einer Rückgabe der Banknote das individuelle charakteristische Merkmal der Banknote und/oder die Daten des Kunden und/oder die Daten der Transaktion dauerhaft abgespeichert werden, und dass bei einer durch den Kunden erfolgten Annahme der ausgegebenen Banknote die gespeicherten Daten betreffend das individuelle charakteristische Merkmal der Banknote, den Kunden und/oder der Transaktion gelöscht werden.

9. Verfahren nach Anspruch 8, **dadurch gekennzeichnet,**
**dass** vor der dauerhaften Abspeicherung der Daten das Einverständnis des Kunden betreffend die Abspeicherung seiner Daten abgefragt wird.

10. Verfahren nach einem der Ansprüche 1 bis 9,
wobei, wenn die Banknote nicht mit den zuvor durch den Geldautomaten ausgegebenen Banknoten übereinstimmt, diese erneut an den Kunden ausgegeben wird .

11. Geldautomat zur Auszahlung von Banknoten an einem Kunden, wobei der Geldautomat eingerichtet ist zur Durchführung des Verfahrens nach einem der vorhergehenden Ansprüche, der Geldautomat aufweisend:
• mindestens einen ein individuelles Merkmal jeder auszugebenden Banknote erfassenden Sensor, und
• eine Datenverarbeitungseinrichtung, die zu jeder an einen Kunden ausgegebenen Banknote das durch den Sensor erfasste individuelle Merkmal der Banknote mit Daten des Kunden, an den die Banknote ausgegeben wurde, und/oder der die Transaktion der Auszahlung der Banknote betreffenden Daten verknüpft
- mindestens einen Sensor, der dazu ausgebildet ist, mindestens ein Merkmal der ausgegebenen und durch einen Kunden abgelehnten Banknoten nach der erneuten Eingabe in den Geldautomaten zu erfassen.

12. Geldautomat nach Anspruch 11, **dadurch gekennzeichnet,**
**dass** er mit einer Schnittstelle zur Ausgabe der durch den Sensor erfassten individuellen Merkmale der Banknoten an eine externe Datenverarbeitungseinrichtung ausgestattet ist,

13. Geldautomat nach Anspruch 11 oder 12, **dadurch gekennzeichnet,**
**dass** der Sensor eine optische Kamera ist, welche die Seriennummer der Banknoten erfasst und mittels Bildverarbeitung auswertet.

## Claims

1. Method for paying banknotes by means of automated teller machines, **characterized by** the following method steps:
• an individual characteristic feature of a banknote dispensed during a payment to a customer that distinguishes the banknote from other banknotes is captured and stored for the banknote, and
• data of a customer and/or data of the transaction relating to the payment are captured and stored for the banknote dispensed to the customer,
• the individual features of the banknote dispensed at the automated teller machine are linked to the data of the transaction, which include the data of the customer to which the banknote was dispensed or the data of the transaction of the payment, or both,
characterized
• in that a query relating to the acceptance or rejection of the dispensed banknote is displayed to the customer on a display device of the automated teller machine after the banknote is dispensed, and
• in that input of the rejection is followed by the banknote being inserted into the automated teller machine by the customer, wherein, when the banknote is inserted, a sensor ascertains at least one individual characteristic feature of the inserted banknote and checks it for concordance with the stored feature.

2. Method according to Claim 1, **characterized in that** the banknotes are stored in a cash box prior to being dispensed to customers, and **in that** the storage of the banknotes in the cash box results in at least one individual feature of each banknote being captured and stored.

3. Method according to Claim 1, **characterized in that** at least one individual feature of each banknote is determined by means of at least one sensor and stored immediately prior to the banknote being dispensed to a customer.

4. Method according to one of the preceding claims, **characterized**
**in that** the individual feature captured and stored is a serial number, a barcode, a matrix code and/or the data contained in an RFID chip of a banknote.

5. Method according to one of the preceding claims, **characterized**
**in that** the data captured and stored for a customer are the data of his bank details.

6. Method according to one of the preceding claims, **characterized**
**in that** the data captured and stored for the transaction relating to the payment are the location, the date and the time of the payment.

7. Method according to one of the preceding claims, **characterized**
**in that** the banknotes dispensed to a customer are taken back by the automated teller machine again at the request of the customer immediately after being dispensed.

8. Method according to Claim 1, **characterized**
**in that** a rejection of the dispensed banknote and a return of the banknote result in the individual characteristic feature of the banknote and/or the data of the customer and/or the data of the transaction being permanently stored, and in that an acceptance of the dispensed banknote by the customer results in the stored data relating to the individual characteristic feature of the banknote, the customer and/or the transaction being erased.

9. Method according to Claim 8, **characterized**
**in that** the permanent storage of the data is preceded by the consent of the customer regarding the storage of his data being requested.

10. Method according to one of Claims 1 to 9,
wherein, if the banknote is not concordant with the banknotes dispensed by the automated teller machine previously, it is dispensed to the customer again.

11. Automated teller machine for paying banknotes to a customer, wherein the automated teller machine is configured to perform the method according to one of the preceding claims, the automated teller machine having:
• at least one sensor capturing an individual feature of each banknote to be dispensed, and
• adata processing device that, for each banknote dispensed to a customer, links the individual feature of the banknote captured by the sensor to data of the customer to whom the banknote was dispensed, and/or of the data relating to the transaction of the payment of the banknote,
• at least one sensor designed to capture at least one feature of the dispensed banknote rejected by a customer after it is inserted into the automated teller machine again.

12. Automated teller machine according to Claim 11, **characterized**
**in that** it is equipped with an interface for outputting the individual features of the banknotes that are captured by the sensor to an external data processing device.

13. Automated teller machine according to Claim 11 or 12, **characterized**
**in that** the sensor is an optical camera that captures the serial number of the banknotes and evaluates it by means of image processing.

## Revendications

1. Procédé de versement de billets de banque par des guichets automatiques de banque, **caractérisé par** les étapes suivantes :
* un attribut caractéristique individuel d'un billet de banque délivré à un client lors d'un versement, qui différencie le billet de banque des autres billets de banque, est détecté à propos de ce billet de banque puis mémorisé, et
* des données du client et/ou des données de la transaction qui concerne le versement sont acquises à propos du billet de banque délivré à un client,
* les attributs individuels du billet de banque délivré au guichet automatique de banque sont liés aux données de la transaction, desquelles font partie les données du client auquel a été délivré le billet de banque ou les données de la transaction du versement ou les deux, caractérisé en ce
* qu'une interrogation concernant l'acceptation ou le refus du billet de banque délivré est affichée à l'attention du client sur un dispositif d'affichage du guichet automatique de banque, et
* qu'après la saisie du refus, le billet de banque est introduit dans le guichet automatique de banque par le client, au moins un attribut caractéristique du billet de banque introduit étant déterminé par un capteur lors de l'introduction du billet de banque et sa concordance avec l'attribut mémorisé étant vérifiée.

2. Procédé selon la revendication 1, **caractérisé en ce qu'**avant d'être délivrés au client, les billets de banque sont déposés dans une cassette d'espèces et **en ce que** lors du dépôt des billets de banque dans la cassette d'espèces, au moins un attribut individuel de chaque billet de banque est détecté et mémorisé.

3. Procédé selon la revendication 1, **caractérisé en ce qu'**au moins un attribut individuel de chaque billet de banque est déterminé au moyen d'au moins un capteur et mémorisé immédiatement avant la délivrance à un client.

4. Procédé selon l'une des revendications précédentes, **caractérisé en ce que** l'attribut individuel détecté et mémorisé est un numéro de série, un code à barres, un code matriciel et/ou les données contenues dans une puce RFID d'un billet de banque.

5. Procédé selon l'une des revendications précédentes, **caractérisé en ce que** les données détectées et mémorisées d'un client sont les données de ses coordonnées bancaires.

6. Procédé selon l'une des revendications précédentes, **caractérisé en ce que** les données détectées et mémorisées de la transaction qui concerne le versement sont le lieu, la date et l'heure du versement.

7. Procédé selon l'une des revendications précédentes, **caractérisé en ce que** les billets de banque délivrés à un client sont de nouveau repris par le guichet automatique de banque immédiatement après la délivrance sur demande du client.

8. Procédé selon la revendication 1, **caractérisé en ce que** lors d'un refus du billet de banque délivré et d'une restitution du billet de banque, l'attribut caractéristique individuel du billet de banque et/ou les données du client et/ou les données de la transaction sont mémorisés de manière permanente, et **en ce que** lors d'une acceptation effectuée par le client du billet de banque délivré, les données mémorisées concernant l'attribut caractéristique individuel du billet de banque, le client et/ou la transaction sont effacées.

9. Procédé selon la revendication 8, **caractérisé en ce qu'**avant la mémorisation permanente des données, l'accord du client concernant la mémorisation de ses données est demandé.

10. Procédé selon l'une des revendications 1 à 9, selon lequel, lorsque le billet de banque ne concorde pas avec les billets de banque préalablement délivrés par le guichet automatique de banque, celui-ci est de nouveau délivré au client.

11. Guichet automatique de banque destiné au versement de billets de banque à un client, le guichet automatique de banque étant conçu pour mettre en œuvre un procédé selon l'une des revendications précédentes, le guichet automatique de banque comprenant :
* au moins un capteur qui détecte un attribut individuel de chaque billet de banque à délivrer, et
* un dispositif de traitement de données qui, à chaque billet de banque délivré à un client, lie l'attribut individuel du billet de banque détecté par le capteur à des données du client auquel a été délivré le billet de banque et/ou aux données qui concernent la transaction du versement du billet de banque
- au moins un capteur qui est configuré pour détecter au moins un attribut des billets de banque délivrés et refusés par un client après une nouvelle introduction dans le guichet automatique de banque.

12. Guichet automatique de banque selon la revendication 11, **caractérisé en ce qu'**il est équipé d'une interface destinée à délivrer les attributs individuels des billets de banque, détectés par le capteur, à un dispositif de traitement de donnes externe.

13. Guichet automatique de banque selon la revendication 11 ou 12, **caractérisé en ce que** le capteur est une caméra optique qui détecte le numéro de série des billets de banque et les interprète au moyen d'un traitement d'image.
